# EUROPEAN PATENT SPECIFICATION

(11) **EP 0 602 922 B1**
(45) Date of publication and mention of the grant of the patent: **14.01.1998**
(21) Application number: 93310034.9
(22) Date of filing: 13.12.1993
(51) Int. Cl.: C07F 7/08

(54) **Method for producing dicycloalkylsubstituted silanes**
Verfahren zur Herstellung von dicycloalkylsubstituierten Silanen
Procédé pour la préparation des silanes substitués par le groupement dicyloalkyle

(30) Priority: 14.12.1992 US 991072
(43) Date of publication of application: 22.06.1994
(73) Proprietor: DOW CORNING CORPORATION, Midland Michigan 48686-0994 (US)
(72) Inventor: Hauenstein, Dale Earl, Midland, Michigan 48640 (US); Schulz, William James, Jr., Midland, Michigan, 48642 (US); Davern, Sean Patrick, Auburn, Michigan, 48611 (US)
(74) Representative: Lewin, John Harvey

(56) References cited:
- EP-A- 0 337 197
- EP-A- 0 460 589
- EP-A- 0 460 590
- DE-A- 3 507 424
- GB-A- 1 590 057
- US-A- 2 823 218
- US-A- 3 220 972

## Description

A prior art method for producing organosilicon compounds comprises reacting an -Si-H containing compound with a -C=C- compound in the presence of a catalyst and is commonly referred to as a hydrosilylation reaction. Typically, the catalyst is platinum metal on a support, a platinum compound or a platinum complex. However, other metals such as rhodium and nickel may also be used.

Although US-A 2,823,218, US-A 3,220,972 and EP-A 0 337 197 disclose processes for the production of monocycloalkylsubstituted silanes it has been found almost impossible to produce dicycloalkylsubstituted silanes using the hydrosilylation reaction. Typically, dicycloalkyl-substituted silanes are produced by more expensive reaction routes such as the Grignard reaction. For example, EP-A1 0 460 590 sets forth two reaction routes for producing dicyclopentyldialkoxysilanes. The first route comprises reacting 2 moles of cyclopentylmagnesium halide as a Grignard reagent and 1 mole of tetramethoxysilane. The second route comprises reacting 2 moles of cyclopentylmagnesium halide with 1 mole of tetrahalogenosilane to give a dicyclopentyldihalogenosilane which is then reacted with methyl alcohol.

It is an object of this invention to provide a method for the production of dicycloalkylsubstituted silanes wherein the method comprises reacting a silane having two hydrogen atoms bonded to the silicon and unsaturated alicyclic olefins using a hydrosilylation catalyst where the reaction is carried out in the presence of oxygen.

It is further an object of this invention to provide a method for the production of dicycloalkyl-substituted silanes wherein the method comprises reacting a monocycloalkylsubstituted silane having one hydrogen atom bonded to the silicon and an unsaturated alicyclic olefin using a hydrosilylation catalyst where the reaction is carried out in the presence of oxygen.

This invention provides a method of producing dicycloalkylsubstituted silanes by reacting a silane selected from halo- or alkoxysilanes having two hydrogen atoms bonded to the silicon atom or monocycloalkylsubstituted halo- or alkoxysilanes having one hydrogen atom bonded to the silicon atom (herein referred to as dihydridosilane) with an unsaturated alicyclic olefin or mixture of alicyclic olefins having at least 4 carbon atoms. The reaction is catalyzed with a hydrosilylation catalyst selected from rhodium compounds, platinum metal, platinum compounds, platinum complexes and nickel compounds. Oxygen is introduced throughout the reaction to enhance reaction parameters such as reaction rate and selectivity of addition.

The instant invention further provides a method for the production of dicycloalkylsubstituted silanes by reacting an unsaturated alicyclic olefin with a monocycloalkyl-substituted halo- or alkoxysilane having one hydrogen atom bonded to the silicon (herein referred to as monohydridosilane) using a hydrosilylation catalyst. The monohydridosilane may be produced using methods known in the art. The monohydridosilane is reacted with an unsaturated alicyclic olefin using a hydrosilylation catalyst under an oxygenated atmosphere to produce the dicycloalkylsubstituted silane.

The dihydridosilanes useful in this invention are those halo- or alkoxysilanes that contain two hydrogen atoms bonded to the silicon atom. The dihydridosilanes useful in the instant invention may be exemplified by silanes having the formula H₂SiR₂ wherein R is selected from a halide or an alkoxy group, -OR¹, where R¹ is an alkyl group of 1 to 5 carbon atoms. R may be further exemplified by halides such as chlorine and bromine or alkoxy groups such as methoxy and ethoxy. The dihydridosilanes useful in the instant invention may be further exemplified by dichlorosilane, dibromosilane and dimethoxysilane. The preferred dihydridosilane is dichlorosilane.

The monohydridosilanes useful in the instant invention are those halo- or alkoxymonocycloalkylsubstituted silanes that contain one hydrogen atom bonded to the silicon atom. The monohydridosilanes useful in the instant invention may be further exemplified by silanes having the formula HSiR₂R² wherein R is selected from a halide or an alkoxy group, -OR¹, where R¹ is an alkyl group of 1 to 5 carbon atoms; and R² is selected from a cycloalkyl of at least 4 carbon atoms. R² is further exemplified by cyclobutyl, cyclopentyl and cycylohexyl. The preferred R² is cyclopentyl.

The unsaturated alicyclic compounds useful in the instant invention are exemplified by unsubstituted unsaturated alicyclic olefins that have at least 4 carbon atoms, substituted unsaturated alicyclic compounds that have at least 4 carbon atoms and mixtures thereof. The unsubstituted unsaturated alicyclic olefins useful in the instant invention are those olefins that have one or more unsaturated carbon-carbon bonds in the ring. The unsubstituted unsaturated alicyclic olefins are further exemplified by cyclobutene, cyclopentene, cyclohexene, cycloheptene, cyclooctene, cyclopentadiene, 1,3-cyclohexadiene, 1,3,5-cycloheptatriene and cyclooctatetraene. The substituted unsaturated alicyclic compounds useful in the instant invention are only those that contain substitution on the saturated carbons (i.e., not at the C=C bond). The substituted unsaturated alicyclic compounds useful in the instant invention are further exemplified by 3-methylcyclopentene, 3-chlorocyclobutene, 4-phenylcyclohexene and 3-methylcyclopentadiene. The preferred unsaturated alicyclic olefin is cyclopentene.

The unsaturated alicyclic olefins useful in the instant invention are commercially available. Prior to reaction of the unsaturated alicyclic olefin it may be preferable to treat or purify the alicyclic olefin. Methods which can be used for treating or purifying the alicyclic olefin are those methods known in the art and include distillation, treatment with alumina and the like.

The reaction between the dihydrido- or monohydridosilane and unsaturated alicyclic olefin is catalyzed using a hydrosilylation catalyst. Hydrosilylation catalysts useful in the instant invention are exemplified by rhodium compounds, platinum metal, platinum compounds, platinum complexes and nickel compounds. The platinum compounds and platinum complexes are exemplified by chloroplatinic acid, chloroplatinic acid hexahydrate, Karstedt's catalyst (Pt(ViMe₂SiOSiViMe₂)) dichlorobis(triphenylphosphine) platinum (II), cis-dichloro-bis(acetonitrile)platinum(II), dicarbonyldichloro-platinum(II), platinum chloride and platinum oxide. Platinum metal is also useful in the instant invention as a hydrosilylation catalyst. The platinum metal can be deposited on a support such a charcoal, alumina or zirconia. The rhodium compounds useful in the instant invention are exemplified by rhodium chloride and RhCl₃(n-Bu₂S)₃.

Any hydrosilylation catalyst which affects the reaction between the dihydrido- or monohydridosilane at an -Si-H and the unsaturated alicyclic olefin at the -C=C- are useful in the instant invention. The preferred hydrosilylation catalyst is chloroplatinic acid.

The amount of the hydrosilylation catalyst suitable for catalyzing the reaction between the unsaturated alicyclic olefin and the dihydrido- or monohydridosilane varies within wide limits. Concentrations of the order of 1 mole of catalyst (providing one mole of platinum, rhodium or nickel) per billion moles of unsaturated groups in the unsaturated alicyclic olefin are useful. Concentrations as high as 1 to 10 moles of catalyst per thousand moles of unsaturated group in the unsaturated alicyclic olefin may be employed. Generally, the economics of the reaction dictates the particular level of catalyst employed. Preferable concentrations are from 1 mole of hydrosilylation catalyst per 1,000 moles to 1,000,000 moles of unsaturated groups in the unsaturated alicyclic olefin. Suitable amounts of supported platinum include, for example, from 0.1 to 10 weight percent, preferably from 0.5 to 5 weight percent based upon elemental platinum.

A further description of platinum catalysts useful in the instant invention can be found in U.S. Patent Nos. 4,578,497, 3,775,452, 3,220,972 and 2,823,218.

The unsupported catalysts useful in the instant invention may be dissolved in a solvent for ease of handling and to facilitate the measuring of the minute amounts needed. Suitable solvents include the various hydrocarbon solvents such as benzene, toluene, xylene and mineral spirits and polar solvents such as alcohols, various glycols and esters. Preferably the solvent should be inert to the catalyst. In some cases it may be desirable to employ also a solvent for one or both of the reactants. The amount of solvent employed is not critical and can vary without limit except for economic and kinetic considerations. Any solvent can be employed which will dissolve the desired reactants under the conditions of the reaction.

The reaction temperature can vary over an extremely wide range. The optimum temperature depends upon the concentration of catalyst present, concentration of oxygen and the nature of the reactants. Best results are obtained by initiating the reaction at 140° to 250°C. when operating in a closed system and maintaining the reaction within reasonable limits of this range. The reaction is typically exothermic and the reaction temperature can be maintained by controlling the rate of addition of one of the reactants or applying cooling means to the reaction vessel. When operating under atmospheric conditions, it is preferred to use a reaction temperature such that the reaction system being carried out under reflux conditions.

The reaction can be carried out at atmospheric, subatmospheric or superatmospheric pressures. The choice of conditions is largely a matter of logic based upon the nature of the reactants and the equipment available. Non-volatile reactants are especially adaptable to being heated at atmospheric pressure. It may be preferred under certain conditions to run the reaction at pressures above atmospheric to reduce the volatility of the reactants at higher temperatures.

The amount of time for the reaction to go to completion depends upon the reactants, reaction temperature, catalyst concentration and oxygen concentration. Determination of when the reaction has gone to completion can be accomplished by simple analytical methods such as gas liquid chromatography or by infrared spectrometry. Any method which is capable of detecting the reactants and/or the product is useful in the instant invention to determine when the reaction has gone to completion. Several samples may have to be analyzed during the period of the reaction to detect the depletion of the reactant or the formation of the product and possible by-products.

The reaction may be run on a continuous, semi-continuous or batch reactor. A continuous reactor comprises a means wherein the reactants are introduced and products are withdrawn simultaneously. The continuous reactor may be a tank, a tubular structure, a tower or other. A semi-continuous reactor comprises a means wherein some of the reactants are charged at the beginning and the remaining are fed continuously as the reaction progresses. The product may optionally be simultaneously withdrawn from the semi-continuous reactor. A batch reactor comprises a means wherein all the reactants are added at the beginning and processes them according to a predetermined course of reaction during which no reactant is fed into or removed from the reactor. Typically, a batch reactor will be a tank with or without agitation means.

The dicycloalkylsubstituted silanes of the instant invention may be produced by several reaction routes. One reaction route comprises producing a monocycloalkyl-substituted halo- or alkoxy- silane having a hydrogen atom attached to the silicon atom (monohydridosilane) and is represented by the formula HSiR₂R² wherein R is selected from a halide or an alkoxy group, -OR¹, where R¹ is an alkyl group of 1 to 5 carbon atoms; and R² is selected from cycloalkenes with at least 4 carbon atoms.

The monohydridosilane may be produced by any method known in the art. The preferable method for forming the monohydridosilane is to react an unsaturated alicyclic olefin with a silane having two hydrogen atoms attached to the silicon (herein referred to as silane). It is preferable to carry out this reaction under an inert atmosphere. However, oxygen may be introduced to facilitate the formation of the monohydridosilane. There is no limitation to the ratio of the silane and unsaturated alicyclic olefin in the reaction to produce the monohydridosilane. It is preferred to use at least one mole of unsaturated alicyclic olefin (providing one mole of C=C) for every mole of silane (providing two moles of Si-H). It is more preferable to use between 8 to 12 moles of unsaturated alicyclic olefin for every mole of silane.

The monohydridosilane is reacted with an unsaturated alicyclic olefin using a hydrosilylation catalyst in the presence of oxygen to produce the dicycloalkyl-substituted silane. Again there is no limitation to the ratio of monohydridosilane and unsaturated alicyclic olefin in the reaction. However, it is preferable to use more than one mole of unsaturated alicyclic olefin for every mole of monohydridosilane and even more preferable to use between 1.1 to 20 moles of unsaturated alicyclic olefin for every mole of monohydridosilane.

Another method by which the dicycloalkylsubstituted silane may be produced comprises reacting an unsaturated alicyclic olefin with a halo- or alkoxysilane having two hydrogen atoms attached to the silicon atom (dihydridosilane) and is represented by the formula H₂SiR₂ wherein R is selected from a halide or an alkoxy, -OR¹, where R¹ is an alkyl group of 1 to 5 carbon atoms; using a hydrosilylation catalyst in the presence of oxygen. There is no limitation to the ratio of dihydridosilane and unsaturated alicyclic olefin in the reaction. It is preferred to use at least two moles of unsaturated alicyclic olefin (providing two moles of C=C) for every mole of dihydridosilane (providing two moles of -SiH). It is more preferable to use between 2.1 to 20 moles of unsaturated alicyclic olefin for every mole of dihydridosilane.

Either reaction route by which the dicycloalkylsubstituted silane is produced requires the presence of an effective amount of oxygen. In the first route the presence of oxygen is required when adding the alicyclic olefin to the monohydridosilane. The second reaction route requires the continuous presence of oxygen. The oxygen provides a means for controlling the rate of the reaction, enhancing the addition of the alicyclic group to the monohydrido- or dihydrido- silane and possibly controlling the by-product formation resulting in a higher yield of the dicycloalkylsubstituted silane. The oxygen is added into the reaction mixture by bubbling it into one of the reactants or by bubbling it into the reaction mixture. The addition of oxygen into the reactants on a subsurface basis is most preferred since it allows for enhanced mass transfer leading to quicker equilibration of its solution concentration. In other words, it is the solution concentration of the oxygen relative to the platinum which is important. Contacting the oxygen on the surface of the liquid, such as by blowing it into the vapor space of the reactor or by purging the reactor system with oxygen, may not be as effective.

The effective amount of oxygen which must be added will be dependent on the operating conditions, the reactants and the amount of catalyst present and can be readily determined by one skilled in the art. It is preferred to introduce the oxygen into the reaction system combined with an inert gas at an oxygen level of a few parts per million up to 99+ weight percent, more preferably 0.1 to 40 weight percent. The inert gas which the oxygen is combined with may be selected from any inert gas such as nitrogen or argon.

The amount of oxygen added during the reaction will affect the rate of reaction and by-product formation. If too little oxygen is added then addition to form the dicycloalkylsubstituted silane may proceed slowly or not at all. For example the reaction between the monohydridosilane and the unsaturated alicyclic olefin may not take place or may proceed slowly or the reaction between the unsaturated alicyclic olefin and dihydridosilane may proceed to form the monohydridosilane and little or none of the dicycloalkyl-substituted silane. The presence of too much oxygen may result in the formation of undesirable by-products such as oxidation products. Further, the presence of too much oxygen may create unsafe operating conditions because of explosive conditions that may result for the dihydridosilanes in the presence of too much oxygen. One skilled in the art will be able to determine the optimum amount of oxygen necessary to provide the desired operating conditions and product distribution. Typically one skilled in the art will be able to make such a determination by monitoring the rate of the reaction and the by-product formation.

So that those skilled in the art may better understand and appreciate the invention taught herein, the following examples are presented.

### I. SEALED-TUBED EXPERIMENTS

### A. Sealed-tube Preparation

Pyrex™ glass tubes, with an approximate inner diameter of 4 mm and length of 28 cm (11 inches), were sealed on one end and dried in air in a 140°C. oven overnight (at least 16 hours). The tubes were then removed from the oven, capped with a rubber septum and allowed to cool to room temperature.

Three methods were used for the preparation of samples in the sealed-tubes. Method 1 involved the addition of reaction mixture under laboratory atmosphere by uncapping a previously nitrogen-purged sealed-tube, adding the reaction mixture, then recapping the tube prior to flame-sealing. Method 2 involved the addition of reaction mixture under a nitrogen-inerted environment (glove bag) to a previously nitrogen-purged sealed-tube. Method 3 involved the addition of reaction mixture to a non-nitrogen-purged tube under laboratory atmosphere.

Approximately 0.8 mL of reaction mixture was added to each sealed-tube (unless noted) using a 1.0 mL syringe with needle. After addition of the reaction mixture, the sealed tubes were placed in a Dewar condenser containing a dry ice/isopropanol mix and flame-sealed using standard techniques.

### B. Reactant Preparation

Cyclopentene was chilled in a dry ice/isopropanol mixture prior to the addition of dichlorosilane. All reaction components were mixed in 14.8 mL (1/2 ounce) vials inside a nitrogen-purged glove bag. Dichlorosilane was condensed in a modified Dewar condenser (filled with a dry ice/isopropanol mixture) equipped with an on-off valve which extended to the inside of the glove bag. This permitted the condensed dichlorosilane to be added to the chilled cyclopentene in an inerted environment.

### C. Analysis

The reaction process was monitored using a Hewlett-Packard™ 5890A series gas chromatograph equipped with a thermal conductivity detector and a 3393A series integrator. The column (25 meters long by 0.02 mm ID) was a Hewlett-Packard™ Ultra 1 (crosslinked methyl silicone gum) capillary column which was operated at a helium head pressure of 358.5 kPa (52 psi). The column temperature was programed from 35°C. to 270°C. at 15°C./minute with an initial holding time of 2 minutes at 35°C. A final holding time of 5 minutes was allowed at 270°C. The injection port and detector temperatures were 300°C. and 325°C., respectively. The split ratio was approximately 28:1. Sample injection volumes were approximately 0.8 µL.

Structural confirmation was accomplished using a Hewlett-Packard™ 5890A series gas chromatograph with flame detection and a 5971A series mass selective detector. The column (30 meters long by 0.25 mm ID) was a J & W Scientific (crosslinked methyl silicone gum - catalog no. 122-1032) capillary column which was operated at a helium head pressure of 124.2 kPa (18 psi). Sample injection volumes were approximately 0.1 µL.

### D. Reagents

Reagents were used without further purification unless otherwise noted. Alumina used to treat some of the cyclopentene was conditioned at 150°C. for 71 hours over DRIERITE™ prior to use. The chloroplatinic acid solution represents a 10 wt% chloroplatinic acid in isopropanol. The Pt/C and Pt/Al₂O₃ were conditioned at 150°C. for 2 hours over DRIERITE™ prior to use.

### Example 1

The following runs show the effect of temperature on the reaction between cyclopentene and dichlorosilane. The results of this example may be found in Table 1. The results are given in calculated % yield based on GC area percent.

Run 1: Dichlorosilane (1.34 grams, 0.013 mole) was added to 8.50 grams (0.12 mole) of chilled cyclopentene. To this mixture, 10.6 µL of chloroplatinic acid catalyst solution was added. The reaction mixture (0.4 mL) was added to sealed-tubes using Method 1 and heated at 140°C. for 4, 8 and 24 hours.

Run 2: Dichlorosilane (2.40 grams, 0.024 mole) was added to 8.55 grams (0.13 mole) of chilled cyclopentene. To this mixture, 12.4 µL of chloroplatinic acid catalyst solution was added. The reaction mixture was added to sealed-tubes using Method 1 and heated at 170°C., 200°C. and 225°C., respectively for 4, 8 and 24 hours.

Run 3: Dichlorosilane (2.10 grams, 0.021 mole) was added to 8.50 grams (0.12 mole) of chilled cyclopentene. Chloroplatinic acid catalyst solution (10.6 µL) was added. The reaction mixture was added to sealed-tubes using Method 1 and heated at 250°C. for 4, 8 and 24 hours.

**Table 1**

| Run | Reaction Temperature | Reaction Time | Product* | | |
|---|---|---|---|---|---|
| | | | A | B | C |
| 1 | 140 | 4 | NA | NA | NA |
| | | 8 | 79.7 | 0 | 1.2 |
| | | 24 | 81.7 | 0.7 | 4.0 |
| | | | | | |
| 2 | 170 | 4 | 16.9 | 43.4 | 4.7 |
| | | 8 | 5.0 | 53.4 | 4.5 |
| | | 24 | 0.3 | 67.5 | 5.7 |
| | | | | | |
| 2 | 200 | 4 | 13.8 | 49.6 | 9.4 |
| | | 8 | 6.0 | 45.3 | 9.9 |
| | | 24 | 0.7 | 57.8 | 8.8 |
| | | | | | |
| 2 | 225 | 4 | 22.1 | 28.2 | 15.2 |
| | | 8 | 16.9 | 32.3 | 16.8 |
| | | 24 | 6.4 | 40.2 | 18.4 |
| | | | | | |
| 3 | 250 | 4 | 20.0 | 20.7 | 15.2 |
| | | 8 | 16.0 | 30.3 | 21.0 |
| | | 24 | 14.6 | 31.2 | 17.4 |

| | | | | | |
|---|---|---|---|---|---|
| * A = Cyclopentyldichlorosilane, C₅H₉SiCl₂ B = Dicyclopentyldichlorosilane, (C₅H₉)₂SiCl₂ C = Cyclopentyltrichlorosilane, C₅H₉SiCl₃ | | | | | |

### Example 2

The following runs show the effect of the catalyst type on the reaction between cyclopentene and dichlorosilane. The results of this example may be found in Table 2.

Run 4: Dichlorosilane (2.01 grams, 0.020 mole) was added to 8.50 grams (0.12 mole) of chilled cyclopentene. To this mixture, 185 µL of a catalyst comprised of 3 wt% RhCl₃(n-Bu₂S)₃ in toluene was added. The reaction mixture was added to sealed-tubes using Method 1 and heated at 140°C. and 250°C., respectively, for 4, 8 and 24 hours.

Run 5: Dichlorosilane (1.77 grams, 0.018 mole) was added to 8.50 grams (0.12 mole) of chilled cyclopentene. This mixture was added to sealed-tubes using Method 1. A RhCl₃ catalyst (0.06 gram) was added to each sealed-tube. The reaction mixtures were heated at 140°C. and 250°C., respectively, for 4, 8 and 24 hours.

Run 6: Dichlorosilane (2.96 grams, 0.029 mole) was added to 8.52 grams (0.13 mole) of chilled cyclopentene. This mixture was added to sealed-tubes using Method 1. Pt/C catalyst (0.11 gram) was added to half of the sealed-tubes and Pt/Al₂O₃ catalyst (0.18 gram) was added to the remaining sealed-tubes. The reaction mixtures were heated at 170°C. for 4, 8 and 24 hours.

Run 7: Dichlorosilane (3.45 grams, 0.034 mole) was added to 8.50 grams (0.13 mole) of chilled cyclopentene. To this mixture, 90 µL of a catalyst comprised of 0.625 wt% of a divinyltetramethyl-disiloxane platinum complex in a solution of dimethylvinyl terminated dimethyl siloxane was added. Sealed tubes were prepared using Method 1 and heated at 170°C. for 4, 8 and 24 hours.

**Table 2**

| Run | Catalyst | Reaction | Reaction | Product* | | |
|---|---|---|---|---|---|---|
| 2 | H₂PtCl₆ | 170 | 4 | 16.9 | 43.4 | 4.7 |
| | | | 8 | 5.0 | 53.4 | 4.5 |
| | | | 24 | 0.3 | 67.5 | 5.7 |
| | | | | | | |
| 4 | RhCl₃ | 140 | 4 | 29.0 | 0.3 | 0.4 |
| | (n-Bu₂S)₃ | | 8 | 40.3 | 0.3 | 0.6 |
| | | | 24 | 20.7 | 0.4 | 0.6 |
| | | | | | | |
| 4 | RhCl₃ | 250 | 4 | 25.6 | 5.9 | 12.6 |
| | (n-Bu₂S)₃ | | 8 | 22.2 | 8.9 | 17.2 |
| | | | 24 | 9.8 | 16.1 | 21.9 |
| | | | | | | |
| 5 | RhCl₃ | 140 | 4 | 0.6 | 0.7 | 16.8 |
| | | | 8 | 0 | 0.6 | 14.4 |
| | | | 24 | 0.2 | 0.6 | 12.3 |
| | | | | | | |
| 5 | RhCl₃ | 250 | 4 | 0 | 0.4 | 12.3 |
| | | | 8 | 0 | 0.5 | 14.5 |
| | | | 24 | NA | NA | NA |
| | | | | | | |
| 6 | Pt/C | 170 | 4 | NA | NA | NA |
| | | | 8 | 16.2 | 4.7 | 5.4 |
| | | | 24 | 8.5 | 6.1 | 3.6 |
| | | | | | | |
| 6 | Pt/Al₂O₃ | 170 | 4 | 35.6 | 5.4 | 16.6 |
| | | | 8 | 29.1 | 5.5 | 15.2 |
| | | | 24 | 27.2 | 8.0 | 20.3 |
| | | | | | | |
| 7 | Pt Complex | 170 | 4 | 81.3 | 1.5 | 1.4 |
| | | | 8 | 76.4 | 2.1 | 1.3 |
| | | | 24 | 65.8 | 11.6 | 3.5 |

| | | | | | | |
|---|---|---|---|---|---|---|
| * A = Cyclopentyldichlorosilane, C₅H₉SiCl₂ B = Dicyclopentyldichlorosilane, (C₅H₉)₂SiCl₂ C = Cyclopentyltrichlorosilane, C₅H₉SiCl₃ | | | | | | |

### Example 3

The following run shows the effect of the method by which the sealed tubes were prepared on the reaction between cyclopentene and dichlorosilane. The results of this example may be found in Table 3.

Run 8: Dichlorosilane (2.64 grams, 0.026 mole) was added to 8.56 grams (0.13 mole) of chilled cyclopentene. To this mixture, 12.8 µL of chloroplatinic acid catalyst solution was added. Sealed-tubes were prepared by Method 2 and by Method 3 and heated at 170°C. for 4, 8 and 24 hours.

**TABLE 3**

| Run | Tube Prep Method | Reaction Temp (°C) | Reaction Time (hrs) | Product* | | |
|---|---|---|---|---|---|---|
| | | | | A | B | C |
| 2 | 1 | 170 | 4 | 16.9 | 43.4 | 4.7 |
| | | | 8 | 5.0 | 53.4 | 4.5 |
| | | | 24 | 0.3 | 67.5 | 5.7 |
| | | | | | | |
| 8 | 2 | 170 | 4 | 72.8 | 0.9 | 0.6 |
| | | | 8 | 70.4 | 1.2 | 0.7 |
| | | | 24 | 17.1 | 38.9 | 4.4 |
| | | | | | | |
| 8 | 3 | 170 | 4 | 54.9 | 1.1 | 0.6 |
| | | | 8 | 53.3 | 1.3 | 0.7 |
| | | | 24 | NA | NA | NA |

| | | | | | | |
|---|---|---|---|---|---|---|
| * A = Cyclopentyldichlorosilane, C₅H₉SiCl₂ B = Dicyclopentyldichlorosilane, (C₅H₉)₂SiCl₂ C = Cyclopentyltrichlorosilane, C₅H₉SiCl₃ | | | | | | |

### Example 4

The following runs show the effect of the source of the cyclopentene on the reaction between cyclopentene and dichlorosilane. The results of this example may be found in Table 4.

Run 9: Dichlorosilane (3.24 grams, 0.032 mole) was added to 8.50 grams (0.12 mole) of chilled cyclopentene (1). Similarly, 3.15 grams (0.031 mole) of dichlorosilane were added to 8.50 grams of chilled cyclopentene (2). In addition, 3.12 grams (0.031 mole) of dichlorosilane were added to 8.50 grams of chilled cyclopentene (3).

To each mixture, 13.0 µL of chloroplatinic acid catalyst solution was added. Sealed-tubes were prepared by Method 1 and heated at 170°C. for 4, 8 and 24 hours.

**Table 4**

| Run | Cyclopentene | Reaction Temp (°C) | Reaction Time (hrs) | Product* | | |
|---|---|---|---|---|---|---|
| | | | | A | B | C |
| 9 | 1 | 170 | 4 | 70.9 | 1.5 | 15.3 |
| | | | 8 | 66.4 | 3.6 | 16.3 |
| | | | 24 | 24.9 | 51.5 | 11.4 |
| | | | | | | |
| 9 | 2 | 170 | 4 | 61.0 | 1.4 | 21.9 |
| | | | 8 | 78.8 | 1.0 | 1.7 |
| | | | 24 | 83.6 | 1.0 | 1.8 |
| | | | | | | |
| 9 | 3 | 170 | 4 | 68.6 | 0.9 | 7.0 |
| | | | 8 | 66.8 | 1.4 | 13.8 |
| | | | 24 | 11.1 | 1.6 | 11.5 |

| | | | | | | |
|---|---|---|---|---|---|---|
| * A = Cyclopentyldichlorosilane, C₅H₉SiCl₂ B = Dicyclopentyldichlorosilane, (C₅H₉)₂SiCl₂ C = Cyclopentyltrichlorosilane, C₅H₉SiCl₃ | | | | | | |

### Example 5

The following runs show the effect of treating the cyclopentene with alumina during the reaction between cyclopentene and dichlorosilane. The results of this example may be found in Table 5.

In the following runs the cyclopentene was treated by heating Al₂O₃ in an oven at 150°C. for several days. After several days the sample was removed from the oven in a closed container and placed in a N₂ glove bag. 20.3 cm (8 inch) drying tubes were filled with approximately 22 grams of the Al₂O₃. The cyclopentene was then poured through the tubes and collected into sample bottles.

Run 10: Dichlorosilane (4.02 grams, 0.040 mole) was added to 8.51 grams (0.12 mole) of chilled alumina-treated cyclopentene (2). Similarly, 3.72 grams (0.037 mole) of dichlorosilane were added to 8.50 grams (0.12 mole) of chilled untreated cyclopentene (2). To each mixture, 13.0 µL of chloroplatinic acid catalyst solution was added. Sealed-tubes were prepared by Method 1 and heated at 170°C. for 4, 8 and 24 hours.

Run 11: Dichlorosilane (3.22 grams, 0.032 mole) was added to 8.50 grams (0.13 mole) of chilled alumina-treated cyclopentene (1). To this mixture, 13.0 µL of chloroplatinic acid catalyst solution was added. Similarly, 0.71 grams (0.0070 mole) of dichlorosilane were added to 8.50 grams (0.13 mole) of chilled untreated cyclopentene (1). Chloroplatinic acid catalyst solution (4.2 µL) was added. Sealed-tubes were prepared according to Method 1 and heated at 170°C. for 4, 8 and 24 hours.

**Table 5**

| Run | Cyclopentene | Reaction Temp (°C) | Reaction Time (hrs) | Product* | | |
|---|---|---|---|---|---|---|
| | | | | A | B | C |
| 10 | Treated 2 | 170 | 4 | 91.0 | 1.1 | 0.5 |
| | | | 8 | 82.2 | 8.7 | 2.1 |
| | | | 24 | 38.2 | 49.6 | 5.4 |
| | | | | | | |
| 10 | Untreated 2 | 170 | 4 | 77.5 | 0.6 | 0.8 |
| | | | 8 | 81.0 | 0.8 | 0.9 |
| | | | 24 | 80.3 | 1.5 | 1.6 |
| | | | | | | |
| 11 | Treated 1 | 170 | 4 | 85.0 | 1.3 | 0.7 |
| | | | 8 | 88.2 | 1.4 | 0.8 |
| | | | 24 | 46.7 | 39.7 | 5.6 |
| | | | | | | |
| 11 | Untreated 1 | 170 | 4 | 10.7 | 1.1 | 0.4 |
| | | | 8 | 17.3 | 1.7 | 6.7 |
| | | | 24 | 5.0 | 3.9 | 12.8 |

| | | | | | | |
|---|---|---|---|---|---|---|
| * A = Cyclopentyldichlorosilane, C₅H₉SiCl₂ B = Dicyclopentyldichlorosilane, (C₅H₉)₂SiCl₂ C = Cyclopentyltrichlorosilane, C₅H₉SiCl₃ | | | | | | |

### Example 6

The following run shows the effect of catalyst concentration and reaction time on the reaction between cyclopentene and cyclopentyldichlorosilane. The results of this example may be found in Table 6.

Run 12: All reactants were chilled in a dry ice/isopropanol prior to mixing. Cyclopentyldichlorosilane (4.0 grams, 0.0024 mole of 98% pure) was added to 8.95 grams (0.131 mole) of cyclopentene in a 14.8 mL (1/2-ounce) vial. To this mixture, 12.3 µL of chloroplatinic acid catalyst solution was added. The catalyzed reaction mixture was added to nine sealed-tubes. An additional 12.3 µL of chloroplatinic acid catalyst solution was added to the final three tubes. The tubes were flame-sealed and heated at 170°C. for 4, 8 and 24 hours.

**Table 6**

| Run | Reaction Temp (°C) | Reaction Time (hrs) | Product* | | |
|---|---|---|---|---|---|
| | | | A | B | C |
| 12 | 170 | 4 | 51.3 | 3.6 | 0.2 |
| | | 8 | 21.0 | 29.1 | 2.0 |
| | | 24 | 6.0 | 42.5 | 2.3 |
| | | | | | |
| 12 | 170 | 4 | 39.3 | 14.4 | 0.1 |
| | | 8 | 14.7 | 38.1 | 2.1 |
| | | 24 | 5.7 | 44.7 | 2.4 |
| | | | | | |
| 12 | 170 | 4 | 9.8 | 33.9 | 1.7 |
| | | 8 | 4.7 | 21.7 | 1.2 |
| | | 24 | 6.8 | 34.8 | 1.9 |

| | | | | | |
|---|---|---|---|---|---|
| * A = Cyclopentyldichlorosilane, C₅H₉SiCl₂ B = Dicyclopentyldichlorosilane, (C₅H₉)₂SiCl₂ C = Dicyclopentylchlorosilane, (C₅H₉)₂SiHCl | | | | | |

### II. 1-LITER PARR REACTOR RUNS

### A. Reactant Preparation

Cyclopentene was chilled in a dry ice/isopropanol or dry ice/acetone mixture prior to the addition of dichlorosilane. All reactions were mixed in a vessel inside a nitrogen-purged glove bag. Dichlorosilane was condensed in a modified Dewar condenser (filled with a dry ice/isopropanol mixture) equipped with an on-off valve which extended into the inside of the glove bag. This permitted the condensed dichlorosilane to be added to the chilled cyclopentene in an inerted environment. Both reactants and catalyst were added to the 1-liter Parr reactor inside the glove bag.

### B. Analysis

Analysis was performed as described in I. SEALED-TUBE EXPERIMENTS.

### C. Reagents

The reagents were the same and treated in the same manner as described in I. SEALED-TUBE EXPERIMENTS unless otherwise specified.

### Example 7

Reaction between cyclopentene and dichlorosilane. The results of this example may be found in Table 7.

Run 13: Dichlorosilane (34.67 grams, 0.34 mole) was added to 135.08 grams (1.98 mole) of chilled cyclopentene. The reaction mixture was placed in the 1-liter Parr reactor. The chloroplatinic acid catalyst solution (180 µL) was then added to the reaction mixture in the Parr reactor. The reaction was performed, with constant agitation, at 170°C. for 8 hours.

Run 14: Dichlorosilane (35.48 grams, 0.35 mole) was added to 135.11 grams (1.98 mole) of chilled cyclopentene. The reaction mixture was placed in a 1-liter Parr reactor. The chloroplatinic acid catalyst solution (180 µL) was then added to the reaction mixture in a Parr reactor. The reaction was performed, with constant agitation, at 200°C. for 8 hours.

Run 15: Dichlorosilane (37.22 grams, 0.37 mole) was added to 135.03 grams (1.98 mole) of chilled cyclopentene. The reaction mixture was placed in a 1-liter Parr reactor. The chloroplatinic acid catalyst solution (180 µL) was then added to the reaction mixture in the Parr reactor. The reaction was performed, with constant agitation, at 170°C. for 8 hours.

Run 16: Dichlorosilane (33.85 grams, 0.34 mole) was added to 128.92 grams (1.89 mole) of chilled cyclopentene. The reaction mixture was placed in a 1-liter Parr reactor. The chloroplatinic acid catalyst solution (180 µL) was then added to the reaction mixture in the Parr reactor. The reaction was performed, with constant agitation, at 170°C. for 8 hours.

Run 17: The1-liter Parr reactor was HF-etched, rinsed with water and various solvents and then dried prior to this run. Dichlorosilane (35.73 grams, 0.35 mole) was added to 135.98 grams (1.20 mole) of chilled cyclopentene. The reaction mixture was placed in the 1-liter Parr reactor. The chloroplatinic acid catalyst solution (180 µl) was then added to the reaction mixture in the Parr reactor. The reaction was performed, with constant agitation, at 170°C. for 6 hours.

**Table 7**

| Run | Reaction Temp (°C) | Reaction Time (hrs) | Product* | | |
|---|---|---|---|---|---|
| | | | A | B | C |
| 13 | 170 | 8 | 51.3 | 5.8 | 4.2 |
| 14 | 200 | 8 | 30.3 | 4.9 | 6.3 |
| 15 | 170 | 8 | 17.7 | 19.2 | 9.5 |
| 16 | 170 | 8 | 27.0 | 7.1 | 5.6 |
| 17 | 170 | 6 | 38.6 | 1.1 | 1.5 |

| | | | | | |
|---|---|---|---|---|---|
| * A = Cyclopentyldichlorosilane, C₅H₉SiCl₂ B = Dicyclopentyldichlorosilane, (C₅H₉)₂SiCl₂ C = Cyclopentyltrichlorosilane, C₅H₉SiCl₃ | | | | | |

### Example 8

Reaction between cyclopentene and cyclopentyldichlorosilane. The results of this example may be found in Table 8.

Run 18: All reactants were added to the 1-liter Parr reactor in laboratory atmosphere (no glove bag). Cyclopentene was refrigerated prior to use (no chilling in dry ice/isopropanol (acetone) mixture).

Cyclopentyldichlorosilane (72.19 grams of 86.8% purity) was added to 135.06 grams (1.98 mole) of refrigerated cyclopentene in a 473.2 mL (16-ounce) chlorosilane bottle. The reaction mixture was loaded into the 1-liter Parr reactor. The chloroplatinic acid catalyst solution (185 µl) was then added to the reaction mixture in the Parr reactor. The reaction was performed, with constant agitation, at 170°C. for 8 hours.

**Table 8**

| Run | Reaction Temp (°C) | Reaction Time (hrs) | Product* | | |
|---|---|---|---|---|---|
| | | | A | B | C |
| 18 | 170 | 8 | 15.8 | 8.2 | 30.6 |

| | | | | | |
|---|---|---|---|---|---|
| * A = Cyclopentyldichlorosilane, C₅H₉SiCl₂ B = Dicyclopentyldichlorosilane, (C₅H₉)₂SiCl₂ C = Cyclopentyltrichlorosilane, C₅H₉SiCl₃ | | | | | |

### III. GLASSWARE

### A. Reaction Equipment

The following runs were carried out in a 100-mL 3-neck round bottom flask which was equipped with a thermometer and thermowatch. The reflux flask was topped with a dry ice condenser which was connected to a bubbler, thermometer adaptor fitted with a 23 cm long disposable pipet for the subsurface addition of a gas which passed through a 25.4 cm (10-inch) long tube packed with DRIERITE™ (CaSO₄), heating mantle and magnetic stirring bar. Constant agitation was used throughout each run.

### B. Analysis

Analysis was performed as described in I. SEALED-TUBE EXPERIMENTS.

### C. Reagents

The reagents were the same and treated in the same manner as described in I. SEALED-TUBE EXPERIMENTS unless otherwise specified. The cyclopentyldichlorosilane was produced in runs 13-17. The 2.07% oxygen (balance nitrogen) was purchased from AGA Specialty Gas, Maumee, Ohio. The air was lab air and by definition contains 78.08% nitrogen, 20.95% oxygen, 0.03% carbon dioxide and 0.93% argon. The nitrogen was lab nitrogen.

### EXAMPLE 9

Reaction between cyclopentene and dichlorosilane. The following runs are examples of the hydrosilylation of cyclopentene with cyclopentyldichlorosilane under various atmospheres to produce dicyclopentyldichlorosilane.

Run 19: Cyclopentyldichlorosilane (25.36 grams of 92.3% purity) was added to 10.22 grams of cyclopentene in the 100-mL round-bottom flask. To this mixture, 77.5 µL of chloroplatinic acid catalyst solution was added. Nitrogen was purged through the reaction mixture at 8cm³/min for 2 hours and 35 minutes. At this point, a sample analysis showed a yield of 59.3% of cyclopentyldichlorosilane, 1.4% dicyclopentyldichlorosilane and 5.3% cyclopentyltrichlorosilane. The nitrogen purge was stopped and the mixture was subjected to a 2.07% oxygen purge at 8cm³/min for 3 hours and 10 minutes. At this point, a sample analysis showed a yield of 59.7% of cyclopentyldichlorosilane, 1.6% dicyclopentyldichlorosilane and 6.0% cyclopentyltrichlorosilane. The 2.07% oxygen purge was stopped and the mixture was subjected to an air purge at 8cm³/min for 2 hours and 45 minutes. Temperature was allowed to vary from 70°C. to 85°C. At this point a sample analysis showed a yield of 64.4% of cyclopentyldichlorosilane, 1.7% dicyclopentyldichlorosilane and 6.5% cyclopentyltrichlorosilane.

At the end of this period, 23.7 grams of tridecane were added to the reaction mixture. The mixture was subjected to a nitrogen purge of 8cm³/min for 3 hours. At this point a sample analysis showed a yield of 60.0% of cyclopentyldichlorosilane, 3.9% dicyclopentyldichlorosilane and 13.1% cyclopentyltrichlorosilane. The nitrogen purge was stopped and the mixture was subjected to a 2.07% oxygen purge of 8cm³/min for 3 hours and 20 minutes. At this point, a sample analysis showed a yield of 49.6% of cyclopentyldichlorosilane, 8.3% dicyclopentyldichlorosilane and 17.3% cyclopentyltrichlorosilane. The 2.07% oxygen purge was stopped and the mixture was subjected to an air purge of 8cm³/min for 70 minutes. Temperature was allowed to vary from 130°C. to 138°C. At this point, a sample analysis showed a yield of 38.0% of cyclopentyldichlorosilane, 13.0% dicyclopentyldichlorosilane and 18.5% cyclopentyltrichlorosilane. An additional 3.8 grams of cyclopentene were added and the reaction was continued for an additional 1 hour and 34 minutes over a temperature range of 100°C. to 110°C. At this point a sample analysis showed a yield of 22.8% of cyclopentyldichlorosilane, 11.1% dicyclopentyldichlorosilane and 15.9% cyclopentyltrichlorosilane. An additional 25.9 grams of tridecane were added to the reaction mixture. Using an air purge of 8cm³/minute, temperature was allowed to range from 133°C. to 154°C. over 8 hours and 20 minutes. At this point, a sample analysis showed a yield of 16.1% dicyclopentyldichlorosilane and 41.3% cyclopentyltrichlorosilane.

Run 20: Cyclopentene (10.24 grams), 16.95 grams of cyclopentyldichlorosilane (92.3% purity) and 15.85 grams of tridecane were added to the 100-ml round-bottom flask. To this mixture, 51.7 µL of chloroplatinic acid catalyst solution were added. An additional 44.11 grams of tridecane were added. Air was purged through the reaction mixture at 8 cm³/min for 3 hours. At this point a sample analysis showed a yield of 43.4% of cyclopentyldichlorosilane, 3.4% dicyclopentyldichlorosilane and 15.8% cyclopentyltrichlorosilane. Air was then purged through the reaction mixture at 16 cm³/min for an additional 4 hours. The temperature was allowed to vary from 135°C. to 140°C. At this point a sample analysis showed a yield of 2.7% of cyclopentyldichlorosilane, 8.4% dicyclopentyldichlorosilane and 46.5% cyclopentyltrichlorosilane. 2.07% oxygen in place of the air, was purged into the reaction mixture at 8 cm³/min for 3 hours. Temperature was held between 135°C. and 138°C. At this point a sample analysis showed a yield of 10.2% of cyclopentyldichlorosilane, 5.8% dicyclopentyldichlorosilane and 35.3% cyclopentyltrichlorosilane. After this time period, the 2.07% oxygen purge was increased to 16 cm³/min for 3 hours. Temperature was held between 135°C. and 137°C. At this point, a sample analysis showed a yield of 6.5% of cyclopentyldichlorosilane, 7.0% dicyclopentyldichlorosilane and 41.2% cyclopentyltrichlorosilane. The 2.07% oxygen purge was then increased to approximately 24 cm³/min for 1 hour and 45 minutes. Temperature was held between 135°C. and 137°C. At this point a sample analysis showed a yield of 3.2% of cyclopentyldichlorosilane, 6.5% dicyclopentyldichlorosilane and 45.6% cyclopentyltrichlorosilane.

An additional 1.71 grams of cyclopentyldichlorosilane were added to the reaction mixture and the 2.07% oxygen purge set to 16 cm³/min for 3 hours. Temperature was held between 155°C. and 160°C. At this point, a sample analysis showed a yield of 8.5% of cyclopentyldichlorosilane, 6.8% dicyclopentyldichlorosilane and 45.3% cyclopentyltrichlorosilane.

Run 21: Cyclopentene (4.10 grams), 10.17 grams of cyclopentyldichlorosilane (81.5% purity) and 25.14 grams of tridecane were added to the 100-ml round-bottom flask. To this mixture, 31.1 µL of chloroplatinic acid catalyst solution were added. An additional 31.71 grams of tridecane were added. 2.07% oxygen was purged through the reaction mixture at 16 cm³/min for 3 hours. Temperature was allowed to vary between 143°C. and 152°C. At this point a sample analysis showed a yield of 55.0% of cyclopentyldichlorosilane, 1.3% dicyclopentyldichlorosilane and 1.8% cyclopentyltrichlorosilane. The 2.07% oxygen purge was increased to approximately 48 cm³/min for 2.5 hours at a temperature ranging from 150°C. to 162°C. At this point, a sample analysis showed a yield of 55.4% of cyclopentyldichlorosilane, 3.0% dicycl pentyldichlorosilane and 3.2% cyclopentyltrichlorosilane. The 2.07% oxygen purge was then reduced to 16 cm³/min for 2 hours at a temperature ranging from 162°C. to 173°C. At this point, a sample analysis showed a yield of 51.1% of cyclopentyldichlorosilane, 6.3% dicyclopentyldichlorosilane and 4.3% cyclopentyltrichlorosilane. The 2.07% oxygen purge was increased to approximately 48 cm³/min for 1 hour at a temperature ranging from 168°C. to 170°C. At this point a sample analysis showed a yield of 53.9% of cyclopentyldichlorosilane, 5.5% dicyclopentyldichlorosilane and 6.9% cyclopentyltrichlorosilane. The 2.07% oxygen purge was then reduced to 16 cm³/min for 1.5 hours at a temperature range from 170°C. to 173°C. At this point a sample analysis showed a yield of 48.9% of cyclopentyldichlorosilane, 7.4% dicyclopentyldichlorosilane and 9.3% cyclopentyltrichlorosilane. The 2.07% oxygen purge at 16 cm³/min was continued for an additional 5 hours at a temperature ranging from 168°C. to 175°C. At this point, a sample analysis showed a yield of 19.5% of cyclopentyldichlorosilane, 13.6% dicyclopentyldichlorosilane and 22.4% cyclopentyltrichlorosilane. The reaction mixture was then subjected to an air purge at 16 cm³/min for 1 hour and 35 minutes at a temperature ranging from 172°C. to 174°C. At this point, a sample analysis showed a yield of 0.3% of cyclopentyldichlorosilane, 22.2% dicyclopentyldichlorosilane and 19.0% cyclopentyltrichlorosilane.

Run 22: Cyclopentene (2.08 grams), 5.10 grams of cyclopentyldichlorosilane (81.5% purity) and 28.49 grams of tridecane were added to the 100-ml round-bottom flask. To this mixture 15.6 µL of chloroplatinic acid catalyst solution was added. Nitrogen was purged through the reaction mixture at 16 cm³/min for 10 hours. Temperature was allowed to vary between 150°C. and 173°C. At this point, a sample analysis showed a yield of 52.9% of cyclopentyldichlorosilane, 0.5% dicyclopentyldichlorosilane and 1.8% cyclopentyltrichlorosilane. The reaction mixture was then subjected to an air purge at 16 cm³/min for 3 hours and 10 minutes at a temperature ranging from 175°C. to 180°C. At this point, a sample analysis showed a yield of 0.6% of cyclopentyldichlorosilane, 22.6% dicyclopentyldichlorosilane and 12.6% cyclopentyltrichlorosilane.

Run 23: Cyclopentene (2.11 grams), 5.18 grams of cyclopentyldichlorosilane (81.5% purity) and 28.62 grams of tridecane were added to the 100-ml round-bottom flask. To this mixture, 15.9 µL of chloroplatinic acid catalyst solution was added. Air (lab air) was purged through the reaction mixture at 16 cm³/min for 6 hours 45 minutes. Temperature was allowed to vary between 152°C. to 178°C. At this point, a sample analysis showed a yield of 0.3% of cyclopentyldichlorosilane, 22.5% dicyclopentyldichlorosilane and 21.5% cyclopentyltrichlorosilane.

### IV. 2-GALLON REACTOR RUNS

### A. Reactant Preparation

Cyclopentene was chilled in a dry ice/isopropanol mixture prior to the addition of dichlorosilane. All reactants were mixed in a 3.8 L (1-gallon) bottle inside a nitrogen-purged glove bag. Dichlorosilane was condensed in a modified condenser (filled with a dry ice/isopropanol mixture) equipped with an on-off valve which extended into the inside of the glove bag. This permitted the condensed dichlorosilane to be added to the chilled cyclopentene in an inert environment. This reaction mixture was transferred to a 3.8 L (1-gallon) feed tank without exposure to laboratory atmosphere. The chloroplatinic catalyst solution was placed in the catalyst feed chamber (Runs 24-26). The catalyst was added directly to the reaction mixture in Runs 27 and 28. The reaction mixture and catalyst was fed into the helium inerted 7.6 L (2-gallon) reactor by pressuring the 3.8 L (1-gallon) feed tank containing the reaction mixture.

### B. Analysis

Reaction progress was monitored using a Hewlett-Packard™ 5890 series gas chromatograph equipped with a thermal conductivity detector. Data was collected, integrated and reported using PC-based Hewlett-Packard™ ChemStation software. The column was a 30 meter X 0.25 mm ID X 1.0 mm film OV-1 (crosslinked and surface bonded dimethylpolysiloxane) capillary column which was operated at a helium head pressure of 68.9 kPa (10 psi). The column temperature was programed from 35°C. to 225°C. at 10°C./min with an initial holding time of 5 minutes at 35°C. A final holding time of 5 minutes was allowed at 225°C. The injection port and detector temperatures were 250°C. and 275°C., respectively. Relevant instrument flows were: split vent flow = 255mL/min, septum purge flow = 0.8mL/min, column make-up flow = 2.7mL/min, detector reference gas flow = 6.5mL/min and column flow = 2.3mL/min. Sample injection volumes were approximately 0.6 µL.

The results reported in Area% were converted to Weight% by the use of GLC response factors that were obtained by standard means.

Run 24: Step 1 - Hydrosilylation of cyclopentene with dichlorosilane to produce cyclopentyldichlorosilane.

Silicone tetrachloride (9.82 grams) was added to 1965 grams (28.85 mole) of chilled cyclopentene in a 3.8 L (1-gallon) bottle. Silicon tetrachloride was used as a water scavenger. To this mixture, 442.40 grams (4.38 mole) of dichlorosilane were added. The reaction mixture was transferred to a 3.8 L (1-gallon) feed tank. Chloroplatinic acid catalyst solution (2.0 ml) was added to the catalyst feed chamber. All reactants and catalyst were fed into an inerted, helium purged, 7.6 L (2-gallon) reactor. The hydrosilylation was performed, with constant agitation, at a temperature ranging from 140.0°C. to 142.8°C. over a 8 hour period under a helium atmosphere. Reaction pressure ranged from 1.10 to 1.26 mPa gauge pressure (160 to 182 psig). At this point a sample analysis showed a yield of 47.7% of cyclopentyldichlorosilane, 14.0% cyclopentylchlorosilane, 0.1% dicyclopentylchlorosilane and 0.3% cyclopentyltrichlorosilane.

Low boiling volatiles, particularly unreacted dichlorosilane, was stripped from the reaction mixture at atmospheric pressure and temperatures ranging from 47.1°C. to 51.5°C. (pot) and 26.1°C. to 42.9°C. (overhead) over a 2.5 hour period, in common laboratory glassware. At this point a sample analysis showed a yield of 73.3% of cyclopentyldichlorosilane, 0.1% dicyclopentyldichlorosilane, 17.4% cyclopentylchlorosilane, 0.1% dicyclopentylchlorosilane and 0.5% cyclopentyltrichlorosilane.

Run 24: Step 2 - Hydrosilylation of cyclopentene with cyclopentyldichlorosilane to produce dicyclopentyldichlorosilane.

In a 7.6 L (2-gallon) reactor, the reaction mixture produced in Step 1 (stripped of dichlorosilane) was purged with 2% oxygen (balance nitrogen) at a temperature ranging from 167.3°C. to 173.9°C. over a 5 hour period under constant agitation. Reaction pressure varied from 1.7 to 1.9 mPa gauge pressure (246 to 276 psig) over this period. The 2% oxygen accounted for 386.1 kPa gauge pressure (56 psig) (on the average) above the vapor pressure of the reaction mixture. At this point a sample analysis showed a yield of 28.9% of cyclopentyldichlorosilane, 4.4% dicyclopentyldichlorosilane, 9.3% dicyclopentylchlorosilane and 21.4% cyclopentyltrichlorosilane. The 2% oxygen purge was turned off and the reaction continued at a temperature ranging between 170.0°C. and 173.5°C. for 2 hours under constant agitation. Reaction pressure varied from 1.64 to 1.7 mPa gauge pressure (238 to 248 psig). At this point, a sample analysis showed a yield of 24.8% of cyclopentyldichlorosilane, 3.7% dicyclopentyldichlorosilane, 11.6% pentylchlorosilane and 27.4% cyclopentyltrichlorosilane.

On the next day, the reaction was continued with the 2% oxygen purge off at a temperature between 169.3°C. and 178.8°C. for 4 hours with constant agitation. Reaction pressure varied from 1.41 to 1.81 mPa gauge pressure (204 to 262 psig). At this point a sample analysis showed a yield of 16.9% of cyclopentyldichlorosilane, 5.1% dicyclopentyldichlorosilane, 16.3% dicyclopentylchlorosilane and 28.5% cyclopentyltrichlorosilane. The reaction mixture was subjected to the 2% oxygen purge at a temperature ranging from 171.4°C. to 172.9°C. for 1 hour and 15 minutes. Reaction pressure varied from 1.43 to 1.48 mPa gauge pressure (208 psig to 214 psig). The 2% oxygen accounted for approximately 55.2 kPa gauge pressure (8 psig) (on the average) above the vapor pressure of the reaction mixture. At this point, a sample analysis showed a yield of 5.2% of cyclopentyldichlorosilane, 5.5% dicyclopentyldichlorosilane, 28.3% dicyclopentylchlorosilane and 22.8% cyclopentyltrichlorosilane.

Run 25: Step 1 - Hydrosilylation of cyclopentene with dichlorosilane to produce cyclopentyldichlorosilane.

Dichlorosilane (657.4 grams - 6.51 mole) was added to 2502 grams (36.73 mole) of chilled cyclopentene (2) in a 3.8 L (1-gallon) bottle. This reaction mixture was transferred to the 3.8 L (1-gallon) feed tank. Chloroplatinic acid catalyst solution (3.3 mL) was added to the catalyst feed chamber. All reactants and catalyst were fed into an inerted, helium purged, 7.6 L (2-gallon) reactor. The hydrosilylation was performed, with constant agitation, at a temperature ranging from 139.0°C. to 142.4°C. over an 8 hour period under a helium atmosphere. Reaction pressure ranged from 1.0 to 1.4 mPa gauge pressure (144 to 206 psig). At this point a sample analysis showed a yield of 82.8% of cyclopentyldichlorosilane, 11.5% cyclopentylchlorosilane and 1.5% dicyclopentylchlorosilane.

Low boiling volatiles, particularly dichlorosilane, were stripped from the reaction mixture at atmospheric pressure and temperatures ranging from 45.4°C. to 48.2°C. (pot) and 38.0°C. to 41.7°C. (overhead) over a 1.5 hour period, in ordinary lab glassware. At this point a sample analysis showed a yield of 88.5% of cyclopentyldichlorosilane, 9.8% cyclopentylchlorosilane and 1.7% pentylchlorosilane.

Run 25: Step 2 - Hydrosilylation of cyclopentene with cyclopentyldichlorosilane to produce dicyclopentyldichlorosilane.

In the 7.6 L (2-gallon) reactor, an additional 1467 grams of cyclopentene were added to the reaction mixture produced in Step 1 (stripped of chlorosilane). The mixture was agitated under a helium atmosphere at a temperature ranging from 170.0°C. to 177.0°C. for 2 hours. The pressure varied from 1.5 to 1.7 mPa gauge pressure (222 to 246 psig). At this point, a sample analysis showed a yield of 91.0% of cyclopentyldichlorosilane, 6.7% cyclopentylchlorosilane and 2.3% dicyclopentylchlorosilane.

The reaction mixture was subjected to a 2% oxygen purge with temperature ranging from 169.8°C. to 173.8°C. over a 3 hour period. The pressure was maintained between 2.1 to 2.2 mPa gauge pressure (300 to 314 psig) over this period. The 2% oxygen accounted for 544.7 kPa gauge pressure (79 psig) (on the average) above the vapor pressure of the reaction mixture. At this point a sample analysis showed a yield of 86.0% of cyclopentyldichlorosilane, 3.7% pentyldichlorosilane, 4.9% dicyclopentylchlorosilane and 5.4% cyclopentyltrichlorosilane.

The 2% oxygen was then reduced to a pressure which was maintained between 1.68 to 1.79 mPa gauge pressure (244 and 260 psig) over a 4 hour period. Temperature remained between 170.1°C. and 171.8°C. over this period. The 2% oxygen accounted for 137.9 kPa gauge pressure (20 psig) (on the average) above the vapor pressure of the reaction mixture. At this point a sample analysis showed a yield of 69.7% of cyclopentyldichlorosilane, 9.4% dicyclopentyldichlorosilane, 5.6% dicyclopentylchlorosilane and 15.3% cyclopentyltrichlorosilane.

The 2% oxygen was increased to a pressure which was maintained between 6.7 to 7.2 mPa gauge pressure (974 and 1040 psig) over a 3 hour period. Temperature remained between 170.1°C. and 171.3°C. over this period. The 2% oxygen accounted for 5.35 mPa gauge pressure (776 psig) (on the average) above the vapor pressure of the reaction mixture. At this point a sample analysis showed a yield of 49.7% of cyclopentyldichlorosilane, 12.8% dicyclopentyldichlorosilane, 5.7% dicyclopentylchlorosilane and 31.8% pentyltrichlorosilane.

On another day, the reaction mixture was subjected to a helium atmosphere at a temperature ranging from 170.0°C. to 182.0°C. for over 2 hours and 15 minutes. Pressure was maintained between 1.49 to 1.78 mPa gauge pressure (216 and 258 psig) throughout this period. At this point a sample analysis showed a yield of 44.0% of cyclopentyldichlorosilane, 15.9% dicyclopentyldichlorosilane, 5.8% dicyclopentylchlorosilane and 34.3% cyclopentyltrichlorosilane.

The reaction mixture was then subjected to 0.57% oxygen (balance nitrogen) with temperature between 169.5°C. and 173.2°C. over 3 hours. Pressure was maintained between 1.81 to 1.9 mPa gauge pressure (262 and 276 psig) over this period. The 0.57% oxygen accounted for 248.2 kPa gauge pressure (36 psig) (on the average) above the vapor pressure of the reaction mixture. At this point, a sample analysis showed a yield of 36.5% of cyclopentyldichlorosilane, 21.3% dicyclopentyldichlorosilane, 6.0% dicyclopentylchlorosilane and 36.2% cyclopentyltrichlorosilane. On the next day, an additional 1.5 mL of chloroplatinic acid catalyst solution was added to the reaction mixture. The 0.57% oxygen was purged into the mixture at a temperature ranging between 169.7°C. and 171.1°C. over 5 hours and 40 minutes. Pressure was maintained between 1.76 to 1.9 mPa gauge pressure (256 and 274 psig) throughout this period. The 0.57% oxygen accounted for 227.5 kPa gauge pressure (33 psig) (on the average) above the vapor pressure of the reaction mixture. At this point a sample analysis showed a yield of 19.4% of cyclopentyldichlorosilane, 34.0% dicyclopentyldichlorosilane, 6.3% dicyclopentylchlorosilane and 40.3% cyclopentyltrichlorosilane.

Run 26: Step 1 - Hydrosilylation of cyclopentene with dichlorosilane to produce cyclopentyldichlorosilane.

Dichlorosilane (654.3 grams - 6.48 mole) was added to 2500.0 grams (36.70 mole) chilled cyclopentene (2). To this mixture, 3.3 mL of chloroplatinic acid catalyst solution was added. The reaction mixture and catalyst were transferred to the 3.8 L (1-gallon) feed tank and, subsequently, fed into the inerted, helium purged, 7.6 L (2-gallon) reactor. The hydrosilylation was performed, with constant agitation, at a temperature ranging from 138.6°C. to 143.5°C. for 9 hours under a helium atmosphere. At this point, a sample analysis showed a yield of 86.6% of cyclopentyldichlorosilane, 9.3% cyclopentylchlorosilane and 2.3% dicyclopentylchlorosilane. The reaction mixture was recatalyzed by adding 3.3 mL of chloroplatinic acid catalyst solution after 5 hours 10 minutes of reaction. Reaction pressure ranged from 979.1 to 1089.4 kPa gauge pressure (142 to 158 psig).

Low boiling volatiles, particularly dichlorosilane, were stripped from the reaction mixture at atmospheric pressure and temperatures ranging from 48.0°C. to 49.5°C. (pot) and 41.1°C. to 42.4°C. (vapor) over a 1.5 hour period, in common laboratory glassware. At this point a sample analysis showed a yield of 90.7% of cyclopentyldichlorosilane, 5.1% cyclopentylchlorosilane, 3.4% dicyclopentylchlorosilane and 0.8% cyclopentyltrichlorosilane.

Run 26: Step 2 - Hydrosilylation of cyclopentene with cyclopentyldichlorosilane to produce dicyclopentyldichlorosilane.

An Additional 375.0 grams of cyclopentene (2) were added to the reaction mixture produced in Step 1 (stripped of dichlorosilane). The reaction mixture (in the 7.6 L (2-gallon) reactor) was subjected to a 0.57% oxygen (balance nitrogen) purge with temperature ranging from 168.7°C. to 172.0°C. over a 6 hour period under a helium atmosphere. The pressure was maintained between 1.7 to 1.8 mPa gauge pressure (242 to 260 psig). The 0.57% oxygen accounted for 248.2 kPa gauge pressure (36 psig) (on the average) above the vapor pressure of the reaction mixture. At this point a sample analysis showed a yield of 7.7% of cyclopentyldichlorosilane, 80.0% dicyclopentyldichlorosilane, 5.6% dicyclopentylchlorosilane and 6.7% cyclopentyltrichlorosilane.

Run 27: Step 1 - Hydrosilylation of cyclopentene with dichlorosilane to produce cyclopentyldichlorosilane.

Dichlorosilane (647.4 grams - 6.4 mole) was added to 2501.75 grams (36.7 mole) of chilled cyclopentene (2). To this mixture, 3.3 mL of chloroplatinic acid catalyst solution was added. The reaction mixture and catalyst were transferred to the 3.8 L (1-gallon) feed tank and, subsequently, fed into the inerted, helium purged, 7.6 L (2-gallon) reactor. The hydrosilylation was performed, with constant agitation, at a temperature ranging from 137.8°C. to 142.4°C. for 6 hours and 20 minutes under a helium atmosphere. At this point a sample analysis showed a yield of 84.9% of cyclopentyldichlorosilane, 0.5% dicyclopentyldichlorosilane, 10.0% cyclopentylchlorosilane and 2.3% dicyclopentylchlorosilane.

The reaction mixture was re-catalyzed by adding 3.3 mL of chloroplatinic acid catalyst solution after 3 hours and 35 minutes into the reaction. Reaction pressure ranged from 1.0 to 1.12 mPa gauge pressure (146 to 162 psig).

Low boiling volatiles, particularly dichlorosilane, was stripped from the reaction mixture at atmospheric pressure and temperatures ranging from 43.0°C. to 46.0°C. (pot) and 37.7°C. to 38.8°C. (overhead) over a 1.5 hour period, in common laboratory glassware. At this point, a sample analysis showed a yield of 90.9% of cyclopentyldichlorosilane, 0.5% dicyclopentyldichlorosilane, 4.4% cyclopentylchlorosilane and 4.2% dicyclopentylchlorosilane.

Run 27: Step 2 - Hydrosilylation of cyclopentene with cyclopemtyldichlorosilane to produce dicyclopentyldichlorosilane.

An additional 753.0 grams of cyclopentene (2) were added to the reaction mixture produced in Step 1 (stripped of dichlorosilane). The reaction mixture (in the 7.6 L (2-gallon) reactor) was subjected to a 0.57% oxygen (balance nitrogen) purge with temperature ranging from 170.3°C. to 171.9°C. over a 6.5 hour period. The pressure was maintained between 1.8 to 1.9 mPa gauge pressure (262 and 282 psig). The 0.57% oxygen accounted for 475.7 kPa gauge pressure (69 psig) (on the average) above the vapor pressure of the reaction mixture. At this point, a sample analysis showed a yield of 8.7% of cyclopentyldichlorosilane, 77.3% pentyldichlorosilane, 6.9% dicyclopentylchlorosilane and 7.1% cyclopentyltrichlorosilane.

## Claims

1. A method for producing dicycloalkylsubstituted silanes comprises:
(A) reacting
(I) a silane selected from
i) silanes having two hydrogen atoms attached to silicon atom and represented by the formula
H₂SiR₂
wherein R is selected from a halide or an alkoxy group, -OR¹, where R¹ is an alkyl group of 1 to 5 carbon atoms, and
ii) silanes having one hydrogen atom attached to silicon atom and represented by the formula
HSiR₂R²
wherein R is selected from a halide or an alkoxy group, -OR¹, where R¹ is an alkyl group of 1 to 5 carbon atoms; and R² is selected from a cycloalkyl group having at least 4 carbon atoms, and
iii) mixtures thereof; and
(II) an unsaturated alicyclic olefin having at least 4 carbon atoms; in the presence of
(III) a hydrosilylation catalyst and
(IV) an effective amount of oxygen; and
(B) recovering the dicycloalkylsubstituted silane produced in (A).

2. A method as claimed in claim 1 wherein the silane is dichlorosilane.

3. A method as claimed in claim 1 wherein the silane is monocyclopentyldichlorosilane.

4. A method as claimed in claim 1 wherein the unsaturated alicyclic olefin is cyclopentene.

5. A method as claimed in claim 1 wherein the hydrosilylation catalyst is selected from rhodium compounds, platinum compounds, platinum metal on a support, platinum complexes and nickel compounds.

6. A method as claimed in claim 1 wherein the oxygen is combined with an inert gas and introduced into the reaction mixture at a controlled rate.

## Patentansprüche

1. Verfahren zur Herstellung dicycloalkylsubstituierter Silane umfassend:
(A)zur Reaktion bringen
(I) eines Silans ausgewählt aus
(i) Silanen mit zwei an ein Siliciumatom gebundenen Wasserstoffatomen, dargestellt durch die Formel
H₂SiR₂,
worin R ausgewählt ist aus einem Halogenid oder einer Alkoxygruppe, -OR¹, wobei R¹ eine Alkylgruppe mit 1 bis 5 Kohlenstoffatomen ist und
(ii)Silanen mit einem an ein Siliciumatom gebundenem Wasserstoffatom dargestellt durch die Formel
HSiR₂R²,
worin R ausgewählt ist aus einem Halogenid oder einer Alkoxygruppe, -OR¹, wobei R¹ eine Alkylgruppe mit 1 bis 5 Kohlenstoffatomen ist und R² ausgewählt ist aus einer Cycloalkylgruppe mit mindestens 4 Kohlenstoffatomen und
(iii) Mischungen daraus und
(II) eines ungesättigten alicyclischen Olefins mit mindestens 4 Kohlenstoffatomen in Gegenwart
(III)eines Hydrosilylierungskatalysators und
(IV) einer effektiven Menge Sauerstoff und
(B) Gewinnen des im Schritt (A) hergestellten dicycloalkylsubstituierten Silans.

2. Verfahren nach Anspruch 1, wobei das Silan Dichlorsilan ist.

3. Verfahren nach Anspruch 1, wobei das Silan Monocyclopentyldichlorsilan ist.

4. Verfahren nach Anspruch 1, wobei das ungesättigte alicyclische Olefin Cyclopenten ist.

5. Verfahren nach Anspruch 1, wobei der Hydrosilylierungskatalysator ausgewählt ist aus Rhodiumverbindungen, Platinverbindungen, Platinmetall auf einem Träger, Platinkomplexen und Nickelverbindungen.

6. Verfahren nach Anspruch 1, wobei der Sauerstoff mit einem Inertgas kombiniert wird und mit einer regulierten Rate in die Reaktionsmischung eingeführt wird.

## Revendications

1. Procédé pour préparer des silanes à substitution dicycloalkyle, qui comprend :
(A) la réaction
(I) d'un silane choisi parmi
i) les silanes ayant deux atomes d'hydrogène attachés à l'atome de silicium et représentés par la formule
H₂SiR²
où R est choisi parmi un halogénure et un groupe alcoxy, -OR¹, où R¹ est un groupe alkyle de 1 à 5 atomes de carbone, et
ii) les silanes ayant un atome d'hydrogène attaché à l'atome de silicium et représentés par la formule
HSiR₂R²
où R est choisi parmi un halogénure et un groupe alcoxy, -OR¹, où R¹ est un groupe alkyle de 1 à 5 atomes de carbone ; et R² est choisi parmi un groupe cycloalkyle ayant au moins 4 atomes de carbone, et
iii) des mélanges de ceux-ci ; et
(II) d'une oléfine alicyclique insaturée ayant au moins 4 atomes de carbone ; en présence
(III) d'un catalyseur d'hydrosilylation et
(IV) d'une quantité efficace d'oxygène ; et
(B) la récupération du silane à substitution dicycloalkyle produit en (A).

2. Procédé selon la revendication 1, dans lequel le silane est le dichlorosilane.

3. Procédé selon la revendication 1, dans lequel le silane est le monocyclopentyldichlorosilane.

4. Procédé selon la revendication 1, dans lequel l'oléfine alicyclique insaturée est le cyclopentène.

5. Procédé selon la revendication 1, dans lequel le catalyseur d'hydrosilylation est choisi parmi les composés du rhodium, les composés du platine, le platine métallique sur un support, les complexes du platine et les composés du nickel.

6. Procédé selon la revendication 1, dans lequel l'oxygène est combiné avec un gaz inerte et introduit dans le mélange réactionnel à un débit réglé.
